# EUROPÄISCHE PATENTANMELDUNG

(11) **EP 4 190 472 A1**
(43) Veröffentlichungstag der Anmeldung: **07.06.2023**
(21) Anmeldenummer: 22210733.6
(22) Anmeldetag: 01.12.2022
(51) Int. Cl.: B23B 31/26

(54) **SPANNVORRICHTUNG ZUM SPANNEN EINES BAUTEILS AN EINEM MASCHINENELEMENT EINER BEARBEITUNGSMASCHINE**

(30) Priorität: 03.12.2021 DE 102021131947
(71) Anmelder: Franz Haimer Maschinenbau KG, 86568 Hollenbach-Igenhausen (DE)
(72) Erfinder: HAIMER, Franz, 86568 Hollenbach-Igenhausen (DE)
(74) Vertreter: Schwarz, Wolfgang

(57) **Zusammenfassung**

Die Erfindung betrifft eine Spannvorrichtung zum Spannen eines Bauteils an einem Maschinenelement einer Bearbeitungsmaschine.

Die Spannvorrichtung (2) sieht einen Grundkörper (10) mit einer Aufnahmeöffnung (46) für das zu spannende Bauteil (4), einen innerhalb des Grundkörpers (10) angeordneten, mit dem Grundkörper (10) verbundenen, eine erste Spannfläche (12) aufweisenden ersten Spannkörper (14) und
einen innerhalb des Grundkörpers (10) angeordneten, eine zweite Spannfläche (16) aufweisenden zweiten Spannkörper (18), der relativ zu dem ersten Spannkörper (14) bewegbar ist, vor, wodurch die erste und die zweite Spannfläche (12, 16) in Kontakt bringbar sind und das Spannen des Bauteils (4) dadurch bewirkbar ist.

## Beschreibung

Die Erfindung betrifft eine Spannvorrichtung zum Spannen eines Bauteils an einem Maschinenelement einer Bearbeitungsmaschine.

Aus der EP 0 339 321 A1 ist eine solche Spannvorrichtung zum Spannen eines Bauteils bekannt.

Dabei sind dort - für das Zusammenwirken mit der Spannvorrichtung beim Spannen - an dem zu spannenden Bauteil ein hohler Zentrier-Ansatz, eine den Zentrier-Ansatz umgebende Anlagefläche sowie eine innen im Ansatz eingearbeitete Ringnut, die eine sich zum freien Ansatzende hin konisch verjüngende Nutflanke aufweist, vorgesehen.

Ein Grundkörper der Spannvorrichtung aus der EP 0 339 321 A1 weist eine dem Ansatz des zu spannenden Bauteils angepasste Aufnahmebohrung auf, die von einer Stirnfläche umgeben ist, an welche die Anlagefläche des Bauteils anpressbar ist.

In dem Grundkörper sind mehrere einzelne bzw. separate, d.h. miteinander nicht verbundene, Spannklauen vorgesehen, die sich jeweils mit ihrem einen ersten Ende an einer Nutflanke im Grundkörper abstützen.

Radial innerhalb der mehreren Spannklauen ist axial beweglich eine Spannhülse angeordnet, die im Bereich der beiden Enden der Spannklauen je einen Spannkegel aufweist, mittels dem die mehreren Spannklauen parallel zu sich selbst radial nach außen bewegbar und ihre Enden an die zugehörigen Nutflanken - von zu spannendem Bauteil und Grundkörper - anpressbar sind.

Die mehreren Spannklauen weisen an ihren beiden Enden Spannflächen auf, deren Winkellage bezüglich der Zentralachse (A) den Nutflanken von zu spannendem Bauteil und Grundkörper angepasst ist, so dass während des gesamten Spannvorganges Flächenberührung zwischen den Spannflächen der mehreren Spannklauen und den Nutflanken von zu spannendem Bauteil und Grundkörper besteht.

Nachteilig mögen an dieser Spannvorrichtung ihr komplexer Aufbau sowie ihre auf bestimmte Geometrien bei von zu spannenden Bauteilen beschränkte Einsatzmöglichkeit sein.

Es ist Aufgabe der Erfindung, die im Stand der Technik bekannte Spannvorrichtung zu verbessern, insbesondere zu vereinfachen, sowie eine einfache und doch positionsgenaue, sichere und reproduzierbare Aufnahme und Halterung eines zu spannenden Bauteils zu ermöglichen.

Diese Aufgabe wird gelöst durch eine Spannvorrichtung zum Spannen eines Bauteils an einem Maschinenelement einer Bearbeitungsmaschine mit den Merkmalen des unabhängigen Anspruchs.

Vorteilhafte Weiterbildungen der Erfindung sind Gegenstand abhängiger Ansprüche sowie der nachfolgenden Beschreibung.

Gegebenenfalls verwendete Begriffe, wie oben, unten, vorne, hinten, links oder rechts sind - soweit nicht anders explizit definiert - nach üblichem Verständnis zu verstehen. Begriffe, wie radial und axial, sind, soweit verwendet und nicht anders explizit definiert, in Bezug auf Mittel- bzw. Symmetrieachsen hier beschriebener Bauteile/Komponenten zu verstehen.

Der Begriff "im Wesentlichen" - soweit verwendet - kann (nach höchstrichterlichem Verständnis) dahingehend verstanden werden, dass mit ihm von "einem praktisch noch erheblichen Maße" die Rede ist. Durch diese Begrifflichkeit so implizierte, mögliche Abweichungen vom Exakten, können sich so ohne Absicht (also ohne funktionale Begründung) aufgrund von Fertigungs- oder Montagetoleranzen o.ä. ergeben.

Die Spannvorrichtung zum, insbesondere reibschlüssigen, Spannen eines Bauteils an einem Maschinenelement einer Bearbeitungsmaschine sieht einen Grundkörper mit einer Aufnahmeöffnung für das zu spannende Bauteil, einen innerhalb des Grundkörpers angeordneten, mit dem Grundkörper verbundenen, beispielsweise verschraubten, eine erste Spannfläche aufweisenden ersten Spannkörper und einen innerhalb des Grundkörpers angeordneten, eine zweite Spannfläche aufweisenden zweiten Spannkörper vor.

Der zweite Spannkörper ist dabei relativ zu dem ersten Spannkörper bewegbar, wodurch die erste und die zweite Spannfläche in Kontakt bringbar sind - und dadurch das Spannen des Bauteils bewirkbar ist bzw. bewirkt werden kann.

So kann beispielsweise der Kontakt von erster und zweiter Spannfläche zu einer radialen Umfangsvergrößerung an dem zweiten Spannkörper führen ("Aufweiten"), welche radiale Umfangsvergrößerung des zweiten Spannkörpers dann eine Spannkraft, beispielsweise im Reibschluss, auf das zu spannende Bauteil ausübt. Insbesondere dann, wenn beispielsweise der zweite Spannkörper zumindest im Bereich seiner radialen Umfangsvergrößerung bzw. Aufweitung in eine Ausnehmung an dem zu spannenden Bauteil, beispielsweise eine Werkzeugaufnahme, eingreift.

Insbesondere zweckmäßig für die Aufweitung ist es auch, wenn der zweite Spannkörper - zumindest im Bereich seiner zweiten Spannfläche - geschlitzt ist, anschaulich gesehen - so Spannzungen aufweist.

Wird beispielsweise der erste Spannkörper (oder der Grundkörper, mit welchem der erste Spannkörper verbunden ist) gegen den zweiten Spannkörper - beispielsweise mittels einer (Druck-)Feder verspannt, kann durch die durch die (Druck-)Feder erzeugbare Federkraft die Relativbewegung von zweitem zu erstem Spannkörper bewirkt - so der Kontakt von erster und zweiter Spannfläche bewerkstelligt - und so, beispielsweise über die dadurch erzeugbare Aufweitung des zweiten Spannkörpers, gespannt (d.h., so das zu spannende Bauteil verspannt bzw. gehalten) werden.

D.h., die Relativbewegung zwischen dem zweiten und dem ersten Spannkörper - in einer ersten Richtung, wie hier der Federkraftrichtung, führt zum Spannen/Halten des zu spannenden Bauteils, während dann in der Regel durch eine Relativbewegung zwischen dem zweiten und dem ersten Spannkörper - in einer zweiten, der ersten Richtung entgegengesetzten Richtung - das Lösen der Spannung/Haltens des zu spannenden Bauteils bewerkstelligt werden kann. Führte die Relativbewegung in der ersten Richtung beispielsweise zu der Umfangsvergrößerung bzw. Aufweitung, so tritt hier, d.h. bei der Relativbewegung in der zweiten Richtung, dann in der Regel eine radiale Umfangsverminderung ein.

Im Falle der - die Spannrelativbewegung (Relativbewegung erste Richtung) erzeugenden - (Druck-)Feder wäre so beispielsweise - um die Gegen-/Löserelativbewegung (Relativbewegung zweite Richtung) zu erzeugen - ein den zweiten Spannkörper entgegen der Federkraft drückendes Betätigungselement zweckmäßig, beispielsweise ein mit dem zweiten Spannkörper verbundener, insbesondere hydraulischer, pneumatischer oder mechanischer, Kolben.

Kurz, Kolben und Feder wirken beim Spannen und Lösen einander entgegen.

Zweckmäßig ist es bei der Spannvorrichtung auch, wenn insbesondere die erste Spannfläche ein Außenkonus an dem ersten Spannkörper und/oder die zweite Spannfläche ein Innenkonus an dem zweiten Spannkörper sind/ist. Insbesondere ist es zweckmäßig, wenn der zweite Spannkörper zumindest im Bereich des Innenkonus (d.h. der zweiten Spannfläche) geschlitzt ist, so beispielsweise Spannzungen aufweist, was das Aufweiten unterstützt bzw. vereinfacht.

Treten Außenkonus und Innenkonus in Kontakt, beispielsweise dadurch, dass der Außenkonus in den Innenkonus geschoben wird (bzw. vice versa), bewirkt dies, insbesondere im Fall eines (zumindest im Bereich des Innenkonus) geschlitzten zweiten Spannkörpers, die radiale Umfangsvergrößerung bzw. das Aufweiten des zweiten Spannkörpers, der so beispielsweise über seinen - radial aufgeweiteten - Außenumfang bzw. Aufweitung eine Spannkraft auf das zu spannenden Bauteil ausüben - und dieses so halten - kann.

Ferner ist es vorteilhaft, wenn an dem zweiten Spannkörper darüber hinaus eine dritte Spannfläche, insbesondere an dessen Außenumfang, beispielsweise in Form eines Außenzylinders/-konus, angeordnet ist - zum in Kontakt bringen mit zu dem spannenden Bauteil und/oder zum Spannen/Halten des zu spannenden Bauteils. Kurz und anschaulich, über die dritte Spannfläche wird das zu spannende Bauteil, insbesondere im Reibschluss und/oder insbesondere in einer Zentrierpassung an dem zu spannenden Bauteil, gehalten bzw. gespannt.

Insbesondere zweckmäßig ist es, wenn die zweite und die dritte Spannfläche des zweiten Spannkörpers, beispielsweise der Innen- und der Außenzylinder/-konus eines solchen zweiten Spannkörpers, an gleicher Stelle am zweiten Spannkörper angeordnet sind.

Ist dort dann auch der zweite Spannkörper noch geschlitzt, so ist dies dem Aufweiten des zweiten Spannkörpers (zum Spannen) besonders zuträglich.

Auch kann vorgesehen sein, dass der Grundkörper mehrteilig ausgebildet ist, insbesondere aus einem, insbesondere einen Auf-/Anlageflansch aufweisenden, Oberteil und einem mit dem Oberteil verbindbaren, insbesondere verschraubbaren, Unterteil.

Über einen solchen Auf-/Anlageflansch an dem Oberteil des Grundkörpers (oder auch unmittelbar an einem Grundkörper) kann der Grundkörper z.B. an einer Oberseite einer Antriebsspindel befestigt werden.

Zweckmäßig erscheint es auch, wenn eine Indexiereinrichtung (zwischen zu spannendem Bauteil und der Spannvorrichtung) für das zu spannende Bauteil an dem Grundkörper vorgesehen ist, beispielsweise in Form von zumindest einem mit Grundkörper verbindbaren, beispielsweise verschraubbaren, Nutenstein. Ein solcher Nutenstein kann dann in einem Formschluss mit dem zu spannenden Bauteil stehen - und so eine exakte Positionierung des Bauteils in Umfangsrichtung in Bezug auf den Grundkörper ermöglichen.

Zweckmäßig, insbesondere um auch die Relativbewegung des zweiten Spannkörpers gegenüber dem ersten Spannkörper zu bewirken (beispielsweise die Spannrelativbewegung (Relativbewegung erste Richtung) oder aber insbesondere auch die (Gegen-)Löserelativbewegung (Relativbewegung zweite Richtung)), ist es, wenn ein, insbesondere hydraulisch oder pneumatisch oder mechanisch betätigbarer, mit dem zweiten Spannkörper verbundener, beispielsweise verschraubter, Kolben vorgesehen ist.

Wird der Kolben dann - beispielsweise hydraulisch oder pneumatisch oder mechanisch - bewegt, verschiebt sich so dann der zweite Spannkörper relativ zu dem ersten Spannkörper.

Die erste und zweite Spannfläche können so dann in Kontakt treten und können so, beispielsweise - im Falle der Spannrelativbewegung (Relativbewegung erste Richtung) - über einen radial aufgeweiteten Außenumfang des zweiten Spannkörpers, die Spannkraft - zum insbesondere reibschlüssigen - Halten/Spannen des zu spannenden Bauteils - bewirken.

Wird die Relativbewegung allerdings in Gegenrichtung angelegt (Relativbewegung zweite Richtung), bei der dann die erste und die zweite Spannfläche "sich voneinander lösen", kann dadurch gegebenenfalls - über einen radial verringerten Außenumfang des zweiten Spannkörpers die Spannkraft vermindert und so das Halten des zu spannenden Bauteils gelöst werden.

Auch kann es zweckmäßig sein, wenn der Grundkörper mittels einer (Druck-)Feder gegen ein Betätigungselement, insbesondere einem, insbesondere hydraulisch oder pneumatisch oder mechanisch betätigbaren, Kolben verspannbar ist, welche Druckfeder insbesondere in Sacklöcher in dem Grundkörper und/oder in dem Betätigungselement aufgenommen ist. Ist so dann weiter der zweite Spannkörper mit dem Kolben verbunden (, wohingegen der erste Spannkörper mit dem Grundkörper verbunden ist), kann durch Kolbenbetätigung - entgegen der Federkraft - der zweite Spannkörper relativ zu dem ersten Spannkörper verschoben werden und so - je nach Anlage der Spannrelativbewegungsrichtung (Relativbewegung erster Richtung) bzw. Gegen-/Löserelativbewegungsrichtung (Relativbewegung zweiter Richtung) - das Spannen oder das Lösen bewirkt werden.

Zweckmäßig ist es auch, um eine lösbare Verbindung zwischen dem ersten Spannkörper und dem Grundkörper zu bewerkstelligen, wenn der erste Spannkörper mit dem Grundkörper verschraubt ist.

Weiterhin ist es auch zweckmäßig, wenn der erste Spannkörper, insbesondere mittels einer Feder, axial elastisch mit dem Grundkörper verbunden ist und/oder der erste Spannkörper axial elastisch ausgebildet ist. Gegebenenfalls kann darüber dem ersten Spannkörper ein (gegebenenfalls auch nur geringer) axialer Ein- bzw. Auszugshubweg ermöglicht werden.

Nach einer Weiterbildung ist es vorgesehen, dass der erste Spannkörper ein Spanndorn und/oder der zweite Spannkörper eine geschlitzte, den ersten Spannkörper in seinem Inneren aufnehmbare Spannhülse sind/ist.

Auch kann weiterbildend vorgesehen sein, dass der erste Spannkörper ein hülsenförmiger, den zweiten Spannkörper zum größten Teil in seinem Inneren aufnehmbarer Spanndorn ist und/oder der zweite Spannkörper ein Spannstift ist mit, insbesondere aufschraubbarer und/oder geschlitzter, Spannkrone. Zweckmäßig ist hier weiter, wenn die Spannkrone derart ausgebildet und/oder angeordnet ist, dass sie - zumindest im Bereich ihres Außenumfangs - außerhalb des ersten Spannkörpers zu liegen kommt. Wird über diesen gespannt, so kann dieser unmittelbar das zu spannende Bauteil kontaktieren.

Hierbei ist es weiter auch zweckmäßig, wenn die dritte Spannfläche an der, insbesondere geschlitzten, Spannkrone angeordnet ist, beispielsweise in Form eines dortigen Außenzylinders/-konus, welcher dann mit seinem "außenliegenden" Außenumfang das zu spannende Bauteil unmittelbar kontaktieren bzw. insbesondere den Reibschluss mit dem zu spannenden Bauteil herstellen kann.

Die erfindungsgemäße Bearbeitungsmaschine, beispielsweise eine Wuchtvorrichtung oder eine Messvorrichtung oder eine Vorrichtung zu einer Fertigung und/oder Formgebung des zu spannenden Bauteils, sieht dann so die erfindungsgemäße Spannvorrichtung, beispielsweise einen Auswucht- oder Messadapter, vor, wobei das zu spannende Bauteil ein Werkzeughalter, insbesondere mit einem Steilkegel, oder ein Werkstück sein kann.

Die bisher gegebene Beschreibung vorteilhafter Ausgestaltungen der Erfindung enthält zahlreiche Merkmale, die in den einzelnen Unteransprüchen teilweise zu mehreren zusammengefasst wiedergegeben sind. Diese Merkmale können jedoch zweckmäßigerweise auch einzeln betrachtet und zu sinnvollen weiteren Kombinationen zusammengefasst werden.

Auch wenn in der Beschreibung bzw. in den Patentansprüchen einige Begriffe jeweils im Singular oder in Verbindung mit einem Zahlwort verwendet werden, soll der Umfang der Erfindung für diese Begriffe nicht auf den Singular oder das jeweilige Zahlwort eingeschränkt sein. Ferner sind die Wörter "ein" bzw. "eine" nicht als Zahlwörter, sondern als unbestimmte Artikel zu verstehen.

Die oben beschriebenen Eigenschaften, Merkmale und Vorteile der Erfindung sowie die Art und Weise, wie diese erreicht werden, werden klarer und deutlicher verständlich im Zusammenhang mit der folgenden Beschreibung der Ausführungsbeispiele der Erfindung, die im Zusammenhang mit der bzw. den Zeichnungen/Figuren näher erläutert werden (gleiche Bauteile/Komponenten und Funktionen weisen in den Zeichnungen/Figuren gleiche Bezugszeichen auf).

Die Ausführungsbeispiele dienen der Erläuterung der Erfindung und beschränken die Erfindung nicht auf darin angegebene Kombinationen von Merkmalen, auch nicht in Bezug auf funktionale Merkmale. Außerdem können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht und/oder mit einem beliebigen der Ansprüche kombiniert werden.

Es zeigen:
- FIG 1: Ansichten einer Spannvorrichtung (Auswucht- oder Messadapter) gemäß einer ersten erfindungsgemäßen Ausführung in einem ersten Schnitt,
- FIG 2: Ansichten der Spannvorrichtung gemäß der ersten erfindungsgemäßen Ausführung in einem zweiten Schnitt,
- FIGen 3a, b, c, d: Ansichten einer Spannhülse der Spannvorrichtung gemäß der ersten erfindungsgemäßen Ausführung,
- FIGen 4a, b, c: Ansichten eines Spanndorns der Spannvorrichtung gemäß der ersten erfindungsgemäßen Ausführung,
- FIGen 5a, b, c: Ansichten eines Befestigungselements/-steges der Spannvorrichtung gemäß der ersten erfindungsgemäßen Ausführung,

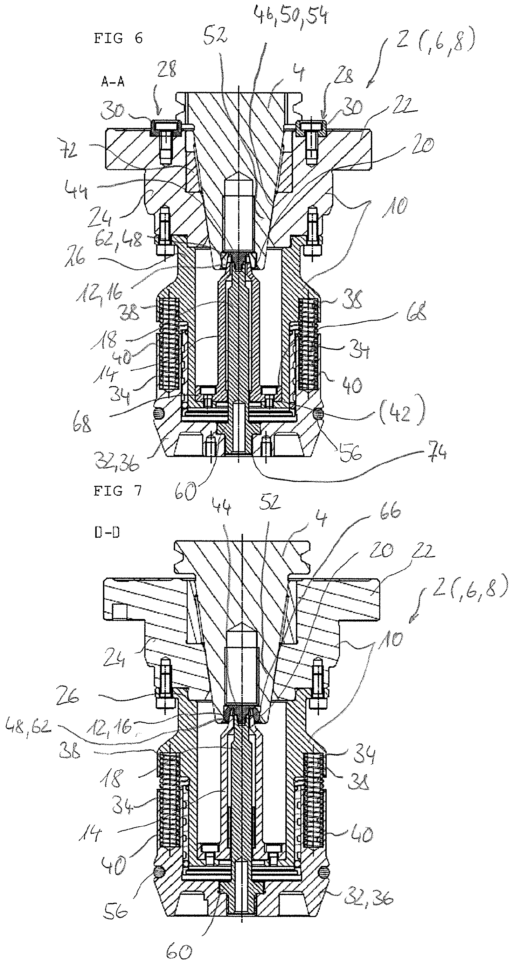

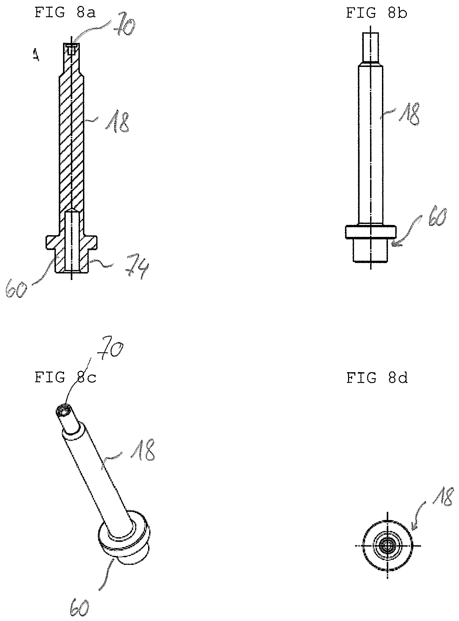

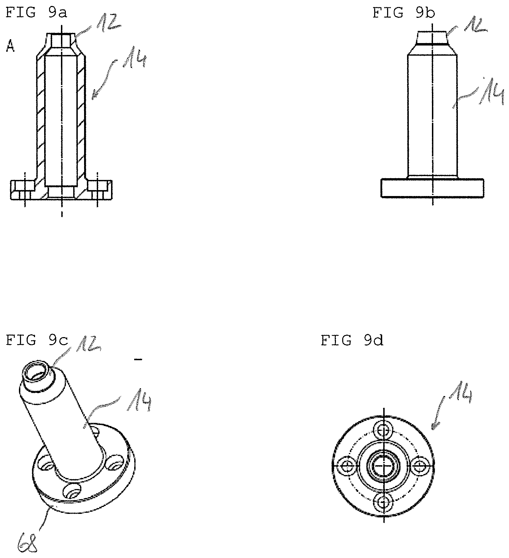

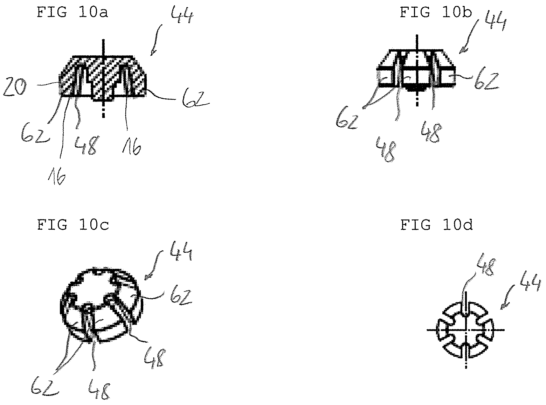

- FIG 6: Ansichten einer Spannvorrichtung (Auswucht- oder Messadapter) gemäß einer zweiten erfindungsgemäßen Ausführung in einem ersten Schnitt,
- FIG 7: Ansichten der Spannvorrichtung gemäß der zweiten erfindungsgemäßen Ausführung in einem zweiten Schnitt,
- FIGen 8a, b, c, d: Ansichten eines Spannstiftes der Spannvorrichtung gemäß der zweiten erfindungsgemäßen Ausführung,
- FIGen 9a, b, c, d: Ansichten eines Spanndorns der Spannvorrichtung gemäß der zweiten erfindungsgemäßen Ausführung,
- FIGen 10a, b, c, d: Ansichten einer Spannkrone der Spannvorrichtung gemäß der zweiten erfindungsgemäßen Ausführung.

FIGen 1 bis 5 und FIGen 6 bis 10 zeigen jeweils einen ersten bzw. zweiten Auswucht- oder Messadapter 2 in verschiedenen Ansichten sowie - separat - ausgewählte Bauteile derselben.

Die gezeigten Auswucht- oder Messadapter 2 sind zum Spannen eines rotierenden Bauteils 4 an einer Auswucht- oder Messmaschine konzipiert.

Bei derartigen Maschinen ist eine zentrische Aufnahme des auszuwuchtenden oder zu messenden Bauteils 4 mit hoher Rundlauf- und Wiederholgenauigkeit von besonderer Bedeutung. Bei dem Bauteil 4 kann es sich z.B. um eine Werkzeugaufnahme für ein Bohr-, Fräs- oder Schleifwerkzeug, einen Rotor oder ein anderes auszuwuchtendes oder zu vermessendes Maschinenteil handeln.

### - Auswucht- oder Messadapter 2 (erste Ausführung, FIGen 1 bis 5)

Der Auswucht- oder Messadapter 2 enthält, wie insbesondere die FIGen 1 und 2 zeigen, einen z.B. in die Antriebsspindel der Auswucht- oder Messmaschine einsetzbaren Grundkörper 10, der bei der gezeigten Ausführung aus einem mit einem Auflageflansch 22 versehenen, eine innere Ausnehmung 54 bzw. eine Aufnahmeöffnung 46 aufweisendes Oberteil 24 und einem mit diesem verschraubten, im Wesentlichen hohlzylindrischen Unterteil 26 besteht.

Über den Auflageflansch 22 kann der Grundkörper 10 z.B. an der Oberseite der Antriebsspindel (nicht gezeigt) befestigt werden.

Das Oberteil 24 weist - im unteren Bereich seiner inneren Ausnehmung 54 bzw. Aufnahmeöffnung 46 - einen konischen Aufnahmebereich 50 für einen konischen Schaft 52 des zu spannenden Bauteils 4 auf.

Der Schaft 52 des Bauteils 4 ist konisch ausgebildet und kann einen polygonalen, kreisrunden oder sonstigen geeigneten Querschnitt aufweisen. Entsprechend ist auch der Aufnahmebereich 50 des Oberteils 24 konisch und weist eine an den Querschnitt des Schafts 52 angepasste Innenkontur auf. Im Bereich des konischen Schaftendes des Bauteils 4 ist eine im Wesentlichen zylindrische Ausnehmung 66 vorgesehen, über welche das Bauteil 4 - mittels des Wuchtadapters 2 (bzw. - genauer - der nachfolgend näher beschriebenen Spannhülse 18) - (im Reibschluss) gespannt bzw. gehalten werden kann.

In der inneren Ausnehmung 54 des Oberteils 24 ist, wie die FIGen 1 und 2 auch zeigen, eine Lagerbuchse 72 eingesetzt, deren Innenkontur auch an den Querschnitt des Schaftes 52 des zu haltenden Bauteils 4 angepasst ist - und das zentrische Einspannen des Bauteils 4 erleichtert.

An der Oberseite des Oberteils 24 sind - einander um die Aufnahmeöffnung 46 gegenüberliegend - zwei Nutensteine 30 verschraubt, welche - können sie mit dem Bauteil 4 und dortiger geeigneter Geometrie in einem Formschluss gebracht werden - der Indexierung des Bauteils 4 dienen.

In dem aus dem Oberteil 24 und dem Unterteil 26 zusammengesetzten Grundkörper 10 sind, wie die FIGen 1 und 2 auch zeigen, außerdem - den Spann-/Haltemechanismus für das zu spannende Bauteil 4 ausbildend - ein mit dem Grundkörper 10 bzw. dessen Unterteil 26 verschraubter (zur Verschraubung - s. auch FIGen 5 a bis c (Befestigungselement/-steg 58)) Spanndorn 14 (in FIGen 4a bis c separat gezeigt) und - diesen aufnehmend - eine gegenüber dem Spanndorn 14 relativ verschieblich angeordnete, geschlitzte Spannhülse 18 angeordnet (in FIGen 3a bis d separat gezeigt).

An dem gegenüber dem Unterteil 26 nach unten vorstehenden Ende der Spannhülse 18 ist ein (pneumatisch betätigbarer) Kolben 32 bzw. 36 befestigt.

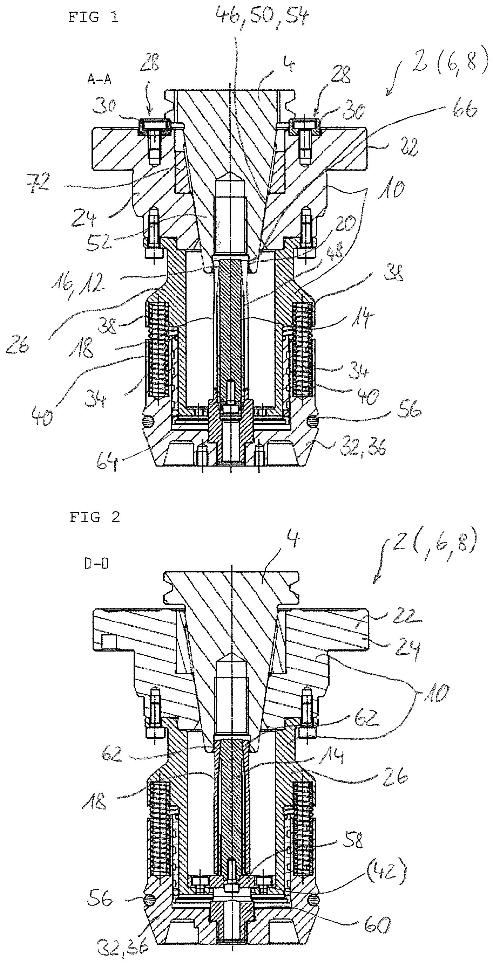

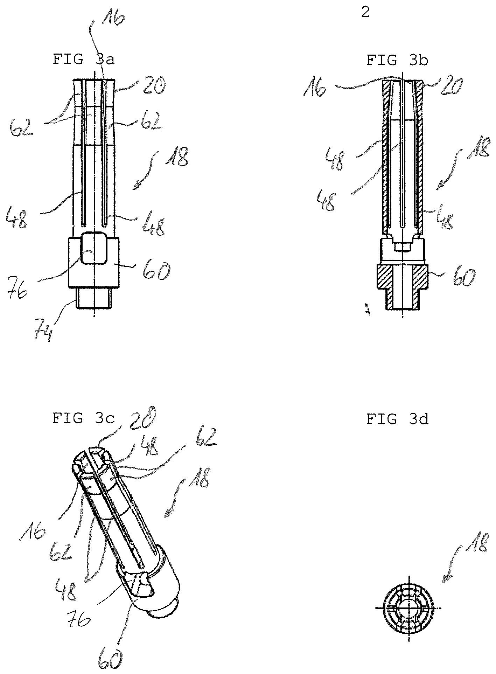

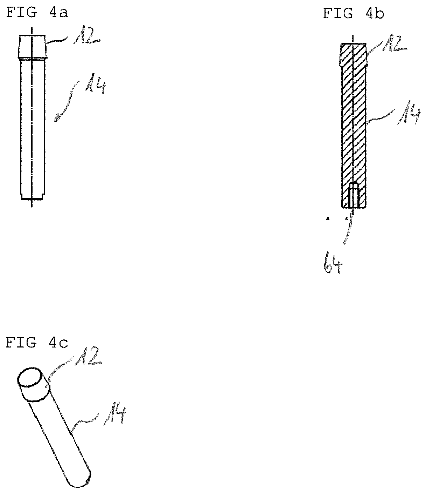

Zwischen dem Kolben 32 bzw. 36 und dem Unterteil 26 sind in den Figuren 1 und 2 erkennbare Druckfedern 34 eingespannt. Die Druckfedern 34 sind zur stabilen Halterung in erkennbare Sacklöcher 38, 40 im Unterteil 26 und im Kolben 32 bzw. 36 eingesetzt.

Durch diese Druckfedern 34 wird die Spannhülse 18 in ihre Spannstellung (dort das zu spannende Bauteil 4 haltend) gedrückt. Durch Verschiebung des Kolbens 32 bzw. 36 entgegen der Kraft der Druckfedern 34 kann die Spannhülse 18 in eine Lösestellung verschoben werden.

Hierzu kann der Kolben 32 bzw. 36 über eine radiale Dichtung 56 abgedichtet in der Antriebsspindel der Auswucht- oder Messmaschine axial verschiebbar angeordnet sein und von der Unterseite mit Druckluft beaufschlagt werden.

Der in den FIGen 4a bis c gesondert dargestellte - stiftartige - Spanndorn 14 weist an seinem dem zu spannenden Bauteil 4 zugewandtem Ende einen Außenkonus 12 auf, wohingegen er im Sonstigen im Wesentlichen zylindrisch ausgebildet ist.

An seinem dem zu spannenden Bauteil 4 abgewandtem Ende sieht der Spanndorn 14 eine Ausnehmung mit Innengewinde 64 vor, mittels welcher der Spanndorn 14 - unter Verwendung des in FIGen 5a bis c dargestellten Befestigungselements/-steges 58 - mit dem Unterteil 26 des Grundkörpers 10 verschraubbar ist (vgl. FIGen 1 und 2).

(Nicht gezeigt - Gegebenenfalls kann diese Verschraubung axial elastisch - beispielsweise mittels einer Feder 42 - ausgebildet sein, um so dem Spanndorn 14 einen (wenn auch nur geringen) axialen Ein-/Auszugsweg zu ermöglichen).

Die in FIGen 3a bis d gesondert dargestellte Spannhülse 18 weist einen hülsenförmigen Sockel 60 und mehrere in Umfangsrichtung durch axiale Schlitze 48 voneinander getrennte, radial federnde Spannzungen 62 auf, deren dem zu spannenden Bauteil 4 zugeordnete vordere Bereiche den Spannbereich zum Spannen/Halten des zu spannenden Bauteils 4 bilden (vgl. FIGen 1 und 2).

Hier, d.h. im Spannbereich, sieht die Spannhülse 18 - außenumfangsseitig - einen Außenzylinder 20 (zur reibschlüssigen Anlage an dem zu haltenden Bauteil 4 bzw. dessen zylindrischer Ausnehmung 66 am konischen Schaftende (vgl. FIGen 1 und 2)) vor. Innenumfangsseitig ist dort ein - dem Außenkonus 12 des Spanndorns 14 angepasster und dort zur Anlage bringbarer - Innenkonus 16 vorgesehen (vgl. FIGen 1 und 2).

Am Außenumfang des unteren Endes des hülsenförmigen Sockels 60 ist ein Außengewinde 74 eingebracht, mittels welchem die Spannhülse 18 mit dem Kolben 32 bzw. 36 verschraubt ist.

Ferner sieht der Sockel 60 der Spannhülse 18 eine radial durch ihn hindurchverlaufende Ausnehmung 76 vor, durch welche, wie die FIGen 1 und 2 verdeutlichen, das/der den Spanndorn 14 haltende Befestigungselement/-steg 58 hindurchgreifen kann - ohne allerdings die Spannhülse 18 - wird sie von der Spannstellung in die Lösestellung bewegt (vgl. Kolben 32 bzw. 36) (bzw. vice versa) - dabei zu kontaktieren und so zu behindern. Kurz, die Spannhülse 18 kann dadurch frei (relativ gegenüber dem Spanndorn 14) verschoben werden.

Im Folgenden wird die Funktionsweise des vorstehend beschriebenen Auswucht- oder Messadapters erläutert (Anm.: FIGen 1 und 2 zeigen den Wuchtadapter 2 in seiner Spannstellung):
In der Lösestellung drückt bzw. hält der Kolben 32 bzw. 36 die Spannhülse 18 - entgegen der Federkraft der Druckfedern 34 - nach oben bzw. gegenüber dem Spanndorn 14 relativ nach oben verschoben, wobei der Innenkonus 16 der Spannhülse 18 und der Außenkonus 12 des Spanndorns 14 (noch) nicht in Anlage gelangt sind. Demzufolge - ist auch der Außenzylinder 20 der Spannhülse 18 (noch) nicht im (Reibschluss-)Kontakt mit dem zu spannenden Bauteil 4 bzw. dessen zylindrischer Ausnehmung 66 am konischen Schaftende.

Wenn - beim Spannen - dann die von unten auf den Kolben 32 bzw. 36 wirkende Kraft nachlässt, wird die Spannhülse 18 über die zwischen dem Unterteil 26 und dem Kolben 32 bzw. 36 eingespannten Druckfedern 34 nach unten verschoben. Dadurch gleitet der Innenkonus 16 der Spannhülse 18 am Außenkonus 12 des Spanndorns 14 entlang, wodurch die vorderen Enden der federnden Spannzungen 62 bzw. der Außenzylinder 20 der Spannhülse 18 durch den Außenkonus 12 des Spanndorns 14 radial nach außen gegen die Innenumfangsfläche der Ausnehmung 66 im zu spannenden Bauteil 4 bzw. dessen zylindrischer Ausnehmung 66 am konischen Schaftende gedrückt werden.

Die vorderen Enden der federnden Spannzungen 62 bzw. der Außenzylinder 20 der Spannhülse 18 gelangen in (Reibschluss-)Kontakt mit dem zu spannenden Bauteil 4 bzw. dessen zylindrischer Ausnehmung 66 am konischen Schaftende - und halten bzw. spannen dieses.

Da, wenn die durch die Aufspreizung der Spannhülse 18 der Außenzylinder 20 der Spannhülse 18 zur Anlage gegen die Innenumfangsfläche der Ausnehmung 66 im zu spannenden Bauteil 4 bzw. dessen zylindrischer Ausnehmung 66 am konischen Schaftende gelangt, eine weitere Spannbewegung blockiert wäre, kann vorgesehen sein, dass der Spanndorn 14 federnd gelagert oder selbst elastisch federnd ist, wodurch dann ein weiterer axialer Ein- bzw. Auszugshubweg ermöglicht wird.

Eine solche federnde Lagerung kann beispielsweise durch ein Federelement zwischen dem Spanndorn 14 und dem Steg 58 bzw. zwischen dem Steg 58 und Unterteil 26 des Grundkörpers 10 realisiert werden.

Durch Druckbeaufschlagung des Kolbens 32 bzw. 36 kann der Lösevorgang in umgekehrter Weise erfolgen, wobei sich - verschiebt sich die Spannhülse 18 gegenüber dem Spanndorn 14 relativ nach oben (und "verschiebt"/löst sich so der Kontakt zwischen dem Innenkonus 16 des Spannhülse 18 und dem Außenkonus 12 des Spanndorns 14) - die vorderen Enden der federnden Spannzungen 62 bzw. der Außenzylinder 20 der Spannhülse 18 radial nach innen bewegen - und so das Bauteil 4 freigeben.

Gegebenenfalls kann die Spannhülse 18 in der Endphase des Lösehubs mit ihrer oberen Stirnfläche zur Anlage an dem Bauteil 4 bzw. einer dortigen entsprechenden Geometrie kommen - und dieses aus der Aufnahmeöffnung 46 des Grundkörpers 10 drücken. Dadurch kann das Bauteil 4 einfach entnommen werden.

Alternativ hierzu kann die Spannhülse 18 bzw. der zweite Spannkörper 18 einen Kragen bzw. eine Auskragung vorsehen, der bzw. die an der unteren Stirnseite des Werkstücks 4 anschlägt und dieses ausstößt.

### - Auswucht- oder Messadapter 2 (zweite Ausführung, FIGen 5 bis 10)

Dieser Auswucht- oder Messadapter 2 enthält auch, wie hier die FIGen 5 und 6 zeigen, einen z.B. in die Antriebsspindel der Auswucht- oder Messmaschine einsetzbaren Grundkörper 10, der bei der gezeigten Ausführung aus einem mit einem Auflageflansch 22 versehenen, eine innere Ausnehmung 54 bzw. eine Aufnahmeöffnung 46 aufweisendes Oberteil 24 und einem mit diesem verschraubten, im Wesentlichen hohlzylindrischen Unterteil 26 besteht.

Über den Auflageflansch 22 kann der Grundkörper 10 z.B. an der Oberseite der Antriebsspindel (nicht gezeigt) befestigt werden.

Das Oberteil 24 weist - im unteren Bereich seiner inneren Ausnehmung 54 bzw. Aufnahmeöffnung 46 - einen konischen Aufnahmebereich 50 für einen konischen Schaft 52 des zu spannenden Bauteils 4 auf.

Der Schaft 52 des Bauteils 4 ist konisch ausgebildet und kann einen polygonalen, kreisrunden oder sonstigen geeigneten Querschnitt aufweisen. Entsprechend ist auch der Aufnahmebereich 50 des Oberteils 24 konisch und weist eine an den Querschnitt des Schafts 52 angepasste Innenkontur auf.

Im Bereich des konischen Schaftendes des Bauteils 4 ist eine im Wesentlichen zylindrische Ausnehmung 66 vorgesehen, über welche das Bauteil 4 - mittels des Wuchtadapters 2 (bzw. - genauer - des nachfolgend näher beschriebenen Spannstifts 18) - (im Reibschluss) gespannt bzw. gehalten werden kann.

In der inneren Ausnehmung 54 des Oberteils 24 ist, wie die FIGen 5 und 6 auch zeigen, eine Lagerbuchse 72 eingesetzt, deren Innenkontur auch an den Querschnitt des Schaftes 52 angepasst ist - und das zentrische Einspannen des Bauteils 4 erleichtert.

An der Oberseite des Oberteils 24 sind - einander um die Aufnahmeöffnung 46 gegenüberliegend - zwei Nutensteine 30 verschraubt, welche - können sie mit dem Bauteil 4 und dortiger geeigneter Geometrie in einem Formschluss gebracht werden - der Indexierung des Bauteils 4 dienen.

In dem aus dem Oberteil 24 und dem Unterteil 26 zusammengesetzten Grundkörper 10 sind, wie die FIGen 5 und 6 auch zeigen, außerdem - den Spann-/Haltemechanismus für das zu spannende Bauteil 4 ausbildend - ein mit dem Grundkörper 10 bzw. dessen Unterteil 26 verschraubter, hülsenförmiger Spanndorn 14 (in FIGen 9a bis d separat gezeigt) und - in diesem aufgenommen - ein gegenüber dem Spanndorn 14 relativ verschieblich angeordneter, eine geschlitzte Spannkrone 44 (in FIGen 10a bis d separat gezeigt) tragender Spannstift 18 (in FIGen 8a bis d separat (ohne Spannkrone 44) gezeigt) angeordnet.

An dem gegenüber dem Unterteil 26 nach unten vorstehenden Ende des Spannstiftes 18 ist ein (pneumatisch betätigbarer) Kolben 32 bzw. 36 befestigt.

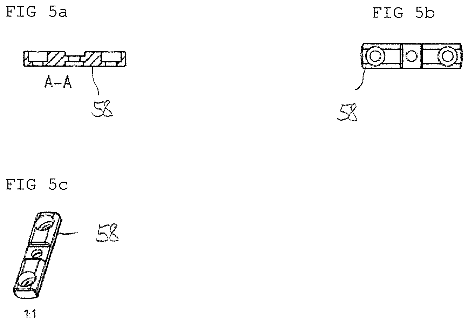

Zwischen dem Kolben 32 bzw. 36 und dem Unterteil 26 sind in den Figuren 5 und 6 erkennbare Druckfedern 34 eingespannt. Die Druckfedern 34 sind zur stabilen Halterung in erkennbare Sacklöcher 38, 40 im Unterteil 26 und im Kolben 32 bzw. 36 eingesetzt.

Durch diese Druckfedern 34 wird der die Spannkrone 44 tragende Spannstift 18 in seine Spannstellung (dort das zu spannende Bauteil 4 haltend) gedrückt.

Durch Verschiebung des Kolbens 32 bzw. 36 entgegen der Kraft der Druckfedern 34 kann der die Spannkrone 44 tragende Spannstift 18 in eine Lösestellung verschoben werden. Hierzu kann der Kolben 32 bzw. 36 über eine radiale Dichtung 56 abgedichtet in der Antriebsspindel der Auswucht- oder Messmaschine axial verschiebbar angeordnet sein und von der Unterseite mit Druckluft beaufschlagt werden.

Der in den FIGen 9a bis d gesondert dargestellte - hülsenförmige - Spanndorn 14 weist an seinem dem zu spannenden Bauteil 4 zugewandtem Ende einen Außenkonus 12 auf, wohingegen er im Sonstigen im Wesentlichen (hohl-)zylindrisch ausgebildet ist.

An seinem dem zu spannenden Bauteil 4 abgewandten Ende sieht der Spanndorn 14 einen Flansch 68 vor, über welcher der Spanndorn 14 mit dem Unterteil 26 des Grundkörpers 10 verschraubbar ist (vgl. FIGen 5 und 6).

(Nicht gezeigt - Gegebenenfalls kann diese Verschraubung axial elastisch - beispielsweise mittels einer Feder 42 - ausgebildet sein, um so dem Spanndorn 14 einen axialen Ein-/Auszugsweg zu ermöglichen).

Der in FIGen 8a bis d (ohne seine Spannkrone 44) gesondert dargestellte Spannstift 18 weist einerends einen sockelartigen Abschnitt 60 sowie andererends eine ein Innengewinde aufweisende Bohrung 70 auf, in welcher die Spannkrone 44 eingeschraubt wird.

Die in den FIGen 10a bis d gesondert dargestellte Spannkrone 44 wird bzw. ist, wie die FIGen 5 und 6 zeigen, - als dem Spannstift 18 zugehöriges Bauteil - auf den Spannstift 18 aufgeschraubt - und bildet dort durch mehrere in Umfangsrichtung durch axiale Schlitze 48 voneinander getrennte, radial federnde Spannzungen 62 den Spannbereich des Spannstiftes 18 - zum Spannen/Halten des zu spannenden Bauteils 4 (vgl. FIGen 5 und 6) - aus.

Hier, d.h. im Spannbereich, sieht der Spannstift 18 bzw. dessen Spannkrone 44 - außenumfangsseitig - einen Außenzylinder 20 (zur reibschlüssigen Anlage an dem zu haltenden Bauteil 4 bzw. dessen zylindrischer Ausnehmung 66 am konischen Schaftende (vgl. FIGen 1 und 2)) vor. Innenumfangsseitig der Bohrkrone 44 ist dort ein - dem Außenkonus 12 des Spanndorns 14 angepasster und dort zur Anlage bringbarer - Innenkonus 16 vorgesehen (vgl. FIGen 1 und 2).

Am Außenumfang des unteren Endes des hülsenförmigen Sockels 60 des Spannstiftes 18 ist ein Außengewinde 74 eingebracht, mittels welchem der Spannstift 18 mit dem Kolben 32 bzw. 36 verschraubt ist.

Im Folgenden wird die Funktionsweise des vorstehend beschriebenen Auswucht- oder Messadapters erläutert (Anm.: FIGen 5 und 6 zeigen den Wuchtadapter 2 in seiner Spannstellung):
In der Lösestellung drückt bzw. hält der Kolben 32 bzw. 36 den Spannstift 18 - entgegen der Federkraft der Druckfedern 34 - nach oben bzw. gegenüber dem Spanndorn 14 relativ nach oben verschoben, wobei der Innenkonus 16 der Spannkrone 44 und der Außenkonus 12 des Spanndorns 14 (noch) nicht in Anlage gelangt sind. Demzufolge ist auch der Außenzylinder 20 der Spannkrone 44 (noch) nicht im (Reibschluss-)Kontakt mit dem zu spannenden Bauteil 4 bzw. dessen zylindrischen Ausnehmung 66 am konischen Schaftende.

Wenn - beim Spannen - dann die von unten auf den Kolben 32 bzw. 36 wirkende Kraft nachlässt, wird der Spannstift 18 über die zwischen dem Unterteil 26 und dem Kolben 32 bzw. 36 eingespannten Druckfedern 34 nach unten verschoben. Dadurch gleiten der Innenkonus 16 der Spannkrone 44 am Außenkonus 12 des Spanndorns 14 entlang, wodurch die vorderen Enden der federnden Spannzungen 62 bzw. der Außenzylinder 20 der Spannkrone 44 durch den Außenkonus 12 des Spanndorns 14 radial nach außen gegen die Innenumfangsfläche der Ausnehmung 66 im zu spannenden Bauteil 4 bzw. dessen zylindrischer Ausnehmung 66 am konischen Schaftende gedrückt werden.

Die vorderen Enden der federnden Spannzungen 62 bzw. der Außenzylinder 20 der Spannkrone 44 gelangen in (Reibschluss-)Kontakt mit dem zu spannenden Bauteil 4 bzw. dessen zylindrischer Ausnehmung 66 am konischen Schaftende - und halten bzw. spannen dieses.

Da, wenn die durch die Aufspreizung der Spannkrone 44 der Außenzylinder 20 der Spannkrone 44 zur Anlage gegen die Innenumfangsfläche der Ausnehmung 66 im zu spannenden Bauteil 4 bzw. dessen zylindrischer Ausnehmung 66 am konischen Schaftende gelangt, eine weitere Spannbewegung blockiert wäre, kann vorgesehen sein, dass der Spanndorn 14 federnd gelagert oder selbst elastisch federnd ist, wodurch dann ein weiterer axialer Ein- bzw. Auszugshubweg ermöglicht wird.

Eine solche federnde Lagerung kann beispielsweise durch ein Federelement zwischen dem Spanndorn 14 und dem Unterteil 26 des Grundkörpers 10 realisiert werden.

Durch Druckbeaufschlagung des Kolbens 32 bzw. 36 kann der Lösevorgang in umgekehrter Weise erfolgen, wobei sich - verschiebt sich der Spannstift 18 gegenüber dem Spanndorn 14 relativ nach oben (und "verschiebt"/löst sich so der Kontakt zwischen dem Innenkonus 16 der Spannkrone 44 und dem Außenkonus 12 des Spanndorns 14) - die vorderen Enden der federnden Spannzungen 62 bzw. der Außenzylinder 20 des Spannstifts 18/Spannkrone 44 radial nach innen bewegen - und so das Bauteil 4 freigeben.

Gegebenenfalls kann die Spannkrone 44 in der Endphase des Lösehubs mit ihrer oberen Stirnfläche zur Anlage an dem Bauteil 4 bzw. einer dortigen entsprechenden Geometrie kommen - und dieses aus der Aufnahmeöffnung 46 des Grundkörpers 10 drücken. Dadurch kann das Bauteil 4 einfach entnommen werden.

Alternativ hierzu können auch radial - beispielsweise durch Langlöcher in dem Spanndorn 14 hindurch - nach außen ragende Elemente am Spannstift 18 bzw. zweiten Spannkörper 18 vorgesehen sein, welche an der unteren Stirnseite des Bauteils 4 anschlagen und dieses ausstoßen.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können hieraus abgeleitet werden, ohne den Schutzumfang der Erfindung zu verlassen.

### Bezugszeichenliste:

- 2: Spannvorrichtung, Auswucht- oder Messadapter
- 4: (zu spannendes) Bauteil, Werkzeughalter, Steilkegel, Werkstück
- 6: Maschinenelement
- 8: Bearbeitungsmaschine, Wuchtvorrichtung, Messvorrichtung, Vorrichtung zu einer Fertigung und/oder Formgebung
- 10: Grundkörper

- 12: erste Spannfläche, Außenkonus
- 14: erster Spannkörper, Spanndorn
- 16: zweite Spannfläche, Innenkonus
- 18: zweiter Spannkörper, Spannhülse, Spannstift
- 20: dritte Spannfläche, Außenzylinder/-konus

- 22: Auf-/Anlageflansch
- 24: Oberteil
- 26: Unterteil
- 28: Indesiereinrichtung
- 30: Nutenstein

- 32: (pneumatischer, hydraulischer oder mechanischer) Kolben
- 34: (Druck-)Feder
- 36: Betätigungselement, (pneumatischer, hydraulischer oder mechanischer) Kolben
- 38: Sackloch
- 40: Sackloch

- 42: Feder
- 44: Spannkrone
- 46: Aufnahmeöffnung
- 48: Schlitz
- 50: konischer Aufnahmebereich
- 52: konischer Schaft
- 54: innere Ausnehmung (des Oberteils 24)
- 56: Dichtung
- 58: Befestigungselement/-steg
- 60: Sockel (von 18), sockelartiger Abschnitt (von 18)

- 62: Spannzungen
- 64: Ausnehmung mit Innengewinde (an 14)
- 66: zylindrische Ausnehmung in konischen Schaft 52
- 68: Flansch (an 14)
- 70: eine ein Innengewinde aufweisende Bohrung (für Spannkrone 44)

- 72: Lagerbuchse
- 74: Außengewinde (an 60)
- 76: Ausnehmung (in 18 für Steg 58)

## Patentansprüche

1. Spannvorrichtung (2) zum, insbesondere reibschlüssigen, Spannen eines Bauteils (4) an einem Maschinenelement (6) einer Bearbeitungsmaschine (8),
**gekennzeichnet, durch**
einen Grundkörper (10) mit einer Aufnahmeöffnung (46) für das zu spannende Bauteil (4),
einen innerhalb des Grundkörpers (10) angeordneten, mit dem Grundkörper (10) verbundenen, eine erste Spannfläche (12) aufweisenden ersten Spannkörper (14) und
einen innerhalb des Grundkörpers (10) angeordneten, eine zweite Spannfläche (16) aufweisenden zweiten Spannkörper (18), der relativ zu dem ersten Spannkörper (14) bewegbar ist, wodurch die erste und die zweite Spannfläche (12, 16) in Kontakt bringbar sind und das Spannen des Bauteils (4) dadurch bewirkbar ist.

2. Spannvorrichtung (2) nach einem der voranstehenden Ansprüche
**dadurch gekennzeichnet, dass**
die erste Spannfläche (12) ein Außenkonus an dem ersten Spannkörper (14) und/oder die zweite Spannfläche (16) ein Innenkonus an dem zweiten Spannkörper (18) sind/ist.

3. Spannvorrichtung (2) nach einem der voranstehenden Ansprüche
**dadurch gekennzeichnet, dass**
an dem zweiten Spannkörper (18) eine dritte Spannfläche (20), insbesondere ein Außenzylinder oder Außenkonus, angeordnet ist zum in Kontakt bringen mit zu dem spannenden Bauteil (4) und/oder zum Spannen des zu spannenden Bauteils (4).

4. Spannvorrichtung (2) nach einem der voranstehenden Ansprüche
**dadurch gekennzeichnet, dass**
der Grundkörper (10) mehrteilig ausgebildet ist, insbesondere aus einem, insbesondere einen Auf-/Anlageflansch (22) aufweisenden, Oberteil (24) und einem mit Oberteil (24) verbindbaren, insbesondere verschraubbaren, Unterteil (26).

5. Spannvorrichtung (2) nach einem der voranstehenden Ansprüche
**gekennzeichnet, durch**
eine Indesiereinrichtung (28) an dem Grundkörper (10), insbesondere zumindest einen mit Grundkörper (10) verbindbaren, Nutenstein (30).

6. Spannvorrichtung (2) nach einem der voranstehenden Ansprüche
**gekennzeichnet, durch**
einen, insbesondere hydraulisch oder pneumatisch betätigbaren, mit dem zweiten Spannkörper (18) verbundenen Kolben (32) .

7. Spannvorrichtung (2) nach einem der voranstehenden Ansprüche
**dadurch gekennzeichnet, dass**
der Grundkörper (10) mittels einer Druckfeder (34) gegen ein Betätigungselement (36), insbesondere einem, insbesondere hydraulisch oder pneumatisch betätigbaren, Kolben (32) verspannbar ist, welche Druckfeder (34) insbesondere in Sacklöcher (38, 40) in dem Grundkörper (10) und/oder in dem Betätigungselement (36) aufgenommen ist.

8. Spannvorrichtung (2) nach einem der voranstehenden Ansprüche
**dadurch gekennzeichnet, dass**
der erste Spannkörper (14) mit dem Grundkörper (10) verschraubt ist und/oder dass der erste Spannkörper (14), insbesondere mittels einer Feder (42), axial elastisch mit dem Grundkörper (10) verbunden und/oder der erste Spannkörper (14) axial elastisch ausgebildet ist.

9. Spannvorrichtung (2) nach einem der voranstehenden Ansprüche
**dadurch gekennzeichnet, dass**
der erste Spannkörper (14) ein Spanndorn und/oder der zweite Spannkörper (18) eine geschlitzte Spannhülse ist, die so ausgebildet ist, dass sie den ersten Spannkörper (14) in ihrem Inneren aufnehmen kann.

10. Spannvorrichtung (2) nach einem der voranstehenden Ansprüche
**dadurch gekennzeichnet, dass**
der erste Spannkörper (14) eine Spannhülse ist, die so ausgebildet ist, dass sie den zweiten Spannkörper (18) in ihrem Inneren aufnehmen kann und/oder der zweite Spannkörper (18) ein Spannstift mit aufschraubbarer geschlitzter Spannkrone (44) ist, wobei die dritte Spannfläche (20) insbesondere an der geschlitzten Spannkrone (44) angeordnet ist.

11. Bearbeitungsmaschine (8) mit einer Spannvorrichtung (2) nach mindestens einem der voranstehenden Ansprüche,
wobei die Bearbeitungsmaschine (8) eine Wuchtvorrichtung oder eine Messvorrichtung oder eine Vorrichtung zu einer Fertigung und/oder Formgebung des zu spannenden Bauteils ist und/oder dass das zu spannende Bauteil (4) ein Werkzeughalter, insbesondere mit einem Steilkegel, oder ein Werkstück ist.
